# EUROPÄISCHE PATENTSCHRIFT

(11) **EP 0 669 673 B1**
(45) Veröffentlichungstag und Bekanntmachung des Hinweises auf die Patenterteilung: **16.12.1998**
(21) Anmeldenummer: 95102409.0
(22) Anmeldetag: 21.02.1995
(51) Int. Cl.: H01Q 13/24, H01Q 1/22, G01F 23/284

(54) **Antenneneinrichtung für ein Füllstandme radargerät**
Antenna device for a radar level gauge
Dispositif d'antenne pour une jauge radar de niveau

(30) Priorität: 23.02.1994 DE 4405855
(43) Veröffentlichungstag der Anmeldung: 30.08.1995
(73) Patentinhaber: VEGA Grieshaber KG, 77709 Wolfach (DE)
(72) Erfinder: Storz, Gregor, D-78713 Schramberg (DE)
(74) Vertreter: Patentanwälte Westphal, Buchner, Mussgnug Neunert, Göhring

(56) Entgegenhaltungen:
- FR-A- 2 368 151
- US-A- 3 765 021
- US-A- 4 053 897
- US-A- 4 280 223
- PATENT ABSTRACTS OF JAPAN vol. 7 no. 96 (P-193) ,22.April 1983 & JP-A-58 022922 (NIPPON KOKAN) 10.Februar 1983,

## Beschreibung

Die Erfindung betrifft eine Antenneneinrichtung für ein Füllstandmeßradargerät gemäß den Merkmalen des Oberbegriffs des Anspruchs 1.

Solche Antenneneinrichtungen für Füllstandmeßradargeräte sind hinlänglich bekannt und werden von der Anmelderin in verschiedensten Ausführungen unter der Bezeichnung VEGAPULS hergestellt und vertrieben. Die Radar-Sensoren der Serie VEGAPULS werden zur kontinuierlichen Füllstandmessung sowohl bei Flüssigkeiten als auch bei Schüttgütern eingesetzt. Das Meßprinzip beruht darauf, kurze Mikrowellenpulse von einer Hornantenne abzustrahlen. In einem kombinierten Sende- und Empfangssystem werden die vom Füllgut reflektierten Pulse erfaßt und durch Laufzeitmessung dieser Pulse der Abstand zum Füllgut ermittelt. Die Einkopplung der Mikrowellen in das Behälterinnere erfolgt über einen abgedichteten Hohlleiter, so daß sich im Behälter keinerlei temperaturempfindliche Komponenten befinden. Eine gute Abdichtung ist hierbei wesentlich.

Aus der DE 41 00 922 C2 ist bekannt, zum Trennen des Behälterinnenraumes von dem elektronischen Sende- und Empfangsteil des Füllstandmeßradargerätes in dem durch das Behälterdach ragenden Hohlleiter ein zylinderförmiges Hohlleiterfenster, z. B. aus Quarzglas, anzuordnen, das einen für die Durchlässigkeit der Mikrowellen günstigen niedrigen dielektrischen Verlustfaktor besitzt. Dieses Hohlleiterfenster dient zur Abtrennung der die elektronischen Bauteile aufweisenden Teile vom Innenraum des Behälters. Allerdings besteht bei Druckeinwirkung von der Gehäuseseite her oder bei einem Unterdruck auf der Behälterseite, insbesondere bei Einwirkung hoher oder niedriger Temperaturen, die Gefahr, daß das Hohlleiterfenster aus dem Hohlleiter herausgedrückt wird. Um ein solches Herausdrücken des Hohlleiterfensters zu vermeiden, ist vorgesehen, den Hohlleiter und das Hohlleiterfenster für eine axiale Abstützung mit konisch ausgebildeten Abschnitten auszubilden, so daß das Hohlleiterfenster bei einer axialen Einwirkung am Hohlleiterrohr abgestützt wird.

Aus dem deutschen Gebrauchsmuster DE 93 12 251.9 U der Anmelderin ist ein Füllstandmeßradargerät bekannt, bei dem zwischen Erregerteil des Hohlleiterantennensystems und dem Gehäuse des Sende- und Empfangsteils eine diffusions- und druckdichte Glasdurchführung angeordnet ist, welche eine Füllstandmessung auch in Behältern mit brennbaren und/oder explosiblen Medien erlaubt.

Der vorliegenden Erfindung liegt die Aufgabe zugrunde, eine Antenneneinrichtung für ein Füllstandmeßradargerät anzugeben, das sich durch einen einfachen technischen Aufbau auszeichnet und leicht zu montieren ist. Darüber hinaus soll die erfindungsgemäße Antenneneinrichtung eine gute chemische Beständigkeit und hohe Druckfestigkeit aufweisen.

Diese Aufgabe wird durch die Merkmale des Anspruchs 1 gelöst.

Aus der Druckschrift PATENT ABSTRACTS OF JAPAN, vol. 7, no. 96 (P-193) ,22.April 1983 & JP-A-58 022922 (NIPPON KOKAN) ist eine Antenneneinrichtung für ein Füllstandmeßradargerät gemäß Oberbegriff von Anspruch 1 bereits bekannt.

Weiterbildungen der Erfindung sind Gegenstand der Unteransprüche.

Die Erfindung beruht also im wesentlichen darauf, die Antenne als Stabstrahler auszubilden und an diesen Stabstrahler eine orthogonal zur Achse des Stabstrahlers liegende Platte einstückig anzuformen. Die Platte ist dabei ausreichend groß auszubilden, um die Öffnung zum Innenraum des Behälters abzudecken. Erfindungsgemäß besteht der Stabstrahler und die an dem Stabstrahler angeformte Platte aus einem dielektrischen Material.

Als Dielektrikum eignen sich die meisten Kunststoffe. Darüber hinaus kann der Stabstrahler samt Platte auch aus Glas bzw. Keramik bestehen. Der Stabstrahler und die sich vom Stabstrahler orthogonal wegerstreckende Platte kann auch aus einer Mischung der genannten Materialien hergestellt sein.

Durch die einstückige Ausbildung von Stabstrahler und Platte, die zugleich als Dichtelement zum diffusionsdichten Abschließen der Behälteröffnung dient, ist eine besonders einfache und rationelle Herstellung der Antenneneinrichtung möglich. Darüber hinaus wird durch die einstückige Ausbildung von Stabantenne und angeformter Platte eine einfache Montage von Stabstrahler und Platte im Füllstandmeßradargerät möglich. Die Platte, die scheibenförmig ausgebildet sein kann, besitzt keine systematische Begrenzung hinsichtlich ihres Durchmessers, wird zweckmäßigerweise jedoch so groß gewählt, daß die Öffnung zum Innenraum des Behälters sicher abgedeckt werden kann.

Wird für das Dielektrikum ein chemisch beständiges Material ausgewählt und der Durchmesser der Platte passend zu einem Behälterflansch an der Öffnung des Behälters dimensioniert, so erhält man eine chemisch beständige Antenne, die zusammen mit bekannten Füllstandmeßradargeräten zur Füllstandmessung eingesetzt werden kann.

Obwohl die einstückig an den Stabstrahler angeformte Platte bzw. Scheibe eine Dicke von mehr als 20 mm besitzen kann, ist es zweckmäßig, die Platte gerade so dick zu wählen, daß sie einerseits EEx-technischen Sicherheitsaspekten entspricht und andererseits eine diffusionsdichte Abschließung des Behälterinnenraumes sichergestellt ist. Unter EEx-Sicherheitsaspekten sind dabei die von der Physikalisch-Technischen Bundesanstalt (PTB) erlassenen Richtlinien für den Explosionsschutz in explosionsgefährdeten Betriebsstätten, d. h. in Bereichen, in denen explosionsfähige Atmosphäre vorhanden ist, zu verstehen. Bei der Füllstandmessung müssen alle Komponenten der Meßeinrichtung eine solche Zulassung besitzen.

Eine Weiterbildung der Erfindung sieht vor, zum Einkoppeln von HF-Energie in den erfindungsgemäßen Stabstrahler aus Dielektrikum einen Resonator mit einem becherartigen Metallmantel aufweist. Der becherartige Metallmantel ist beispielsweise mit einer rohrförmigen Seitenwandung und einer an einem Ende der Seitenwandung angeordneten Deckelwandung versehen. In diesem becherartigen Metallmantel sitzt der Stabstrahler mit seinem einen Ende, wobei der Metallmantel zusätzlich noch mit einer Öffnung zum Durchführen eines im Stabstrahler angeordneten Erregerelementes versehen ist. Das andere Ende des Stabstrahlers ragt dagegen bei montiertem Füllstandmeßradargerät durch die hierfür vorgesehene Öffnung in den Innenraum des Behälters.

Durch eine derartige Ausbildung von Resonator und Stabstrahler wird eine gute HF-Einkopplung der HF-Energie in das eine Ende des dielektrischen Stabstrahlers gewährleistet. Es hat sich als zweckmäßig erwiesen, in der Öffnung im Metallmantel des Resonators eine koaxiale Durchführung anzuordnen, über welche das in dem Ende des Stabstrahlers sitzende Erregerelement, beispielsweise über ein Koaxialkabel, vom Sende- und Empfangsteil des Füllstandmeßradargerätes mit HF-Energie versorgt wird.

Eine andere Weiterbildung der Erfindung sieht vor, daß der becherartige Metallmantel des Resonators an seiner der Deckelwandung gegenüberliegenden offenen Seite mit einer sich von der Seitenwandung und vom Stabstrahler wegerstreckenden und mindestens annähernd orthogonal zur Achse des Stabstrahlers angeordneten Platte, vorzugsweise eine Metallplatte, versehen ist. An dieser Metallplatte kann die mit dem Stabstrahler einstückig verbundene dielektrische Platte flächig anliegen. Aus fertigungstechnischen Gründen wird die parallel zur dielektrischen Platte liegende Platte vorteilhafterweise ebenfalls einstückig mit der Deckelwandung bzw. Seitenwandung des Resonators hergestellt. Durch das Anliegen der dielektrischen Platte an der Platte des Resonators kann die dielektrische Platte wirksam gestützt werden, so daß höhere Druckbelastungen möglich sind. So kann beispielsweise auf der Behälterseite ein größerer Unterdruck herrschen. Darüber hinaus sind auch durch die mechanische Stabilisierung höhere Temperaturschwankungen möglich.

Zur Erzielung einer möglichst optimalen Abstrahlung der Mikrowellen in den Behälterinnenraum ist es erfindungsgemäß vorgesehen, den Stabstrahler in etwa mittig zur dielektrischen Platte anzuordnen. Hierdurch wird der Stabstrahler automatisch im Zentrum der Behälteröffnung plaziert, so daß eine unsymmetrische Beeinflussung der abgestrahlten Mikrowellen aufgrund von Behälterflanschwandungen des Behälters vermieden wird.

Erfindungsgemäß kann der dielektrische Stabstrahler samt dielektrischer Platte miteinander verschweißt, in einem Stück gesintert oder komplett durch Spritzguß hergestellt werden.

Die Erfindung und deren Vorteile wird im Zusammenhang mit einem Ausführungsbeispiel anhand einer Figur eingehend erläutert.

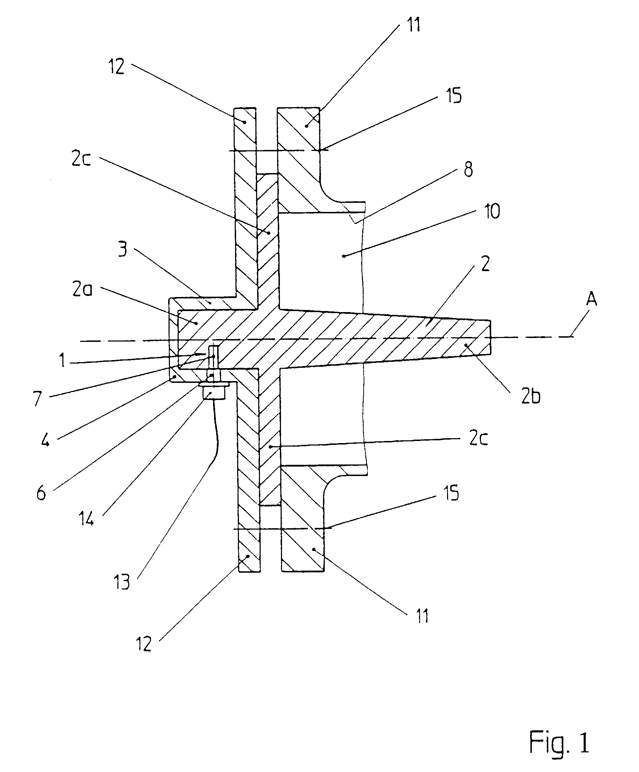

Das in der Figur dargestellte Ausführungsbeispiel zeigt einen Behälterflansch 11 eines nicht näher gezeigten Behälters, dessen Füllstand mit einem Füllstandmeßradargerät ermittelt werden soll. Der Behälterflansch 11 weist eine beispielsweise kreisförmige Öffnung 8 auf, die in einen Innenraum 10 des Behälters führt. Auf den Behälterflansch 11 ist die Unterseite des Füllstandmeßradargerätes montiert.

Das lediglich ausschnittsweise dargestellte Füllstandmeßradargerät weist eine Vorrichtung, z.B. einen Resonator, zum Einkoppeln von HF-Energie und einen Stabstrahler 2 zum Abstrahlen von aus der eingekoppelten HF-Energie erzeugten Mikrowellen auf. Die HF-Energie kann auf beliebig geeignete Weise eingekoppelt werden. Wesentlich ist lediglich, wie in der Figur gezeigt, ein mit Dielektikum gefüllter Hohlleiter. Der Stabstrahler 2 und Resonator ist im vorliegenden Ausführungsbeispiel zu einer Achse A rotationssymmetrisch aufgebaut. Der aus dielektrischem Material, beispielsweise Kunststoff, Glas, Keramik oder einer Mischung aus diesen Elementen bestehende Stabstrahler 2 sitzt mit seinem einen Ende 2a in einem becherartigen Metallmantel und ragt mit seinem anderen Ende 2b durch die Öffnung 8 in den Innenraum 10 des Behälters. Der becherartige Metallmantel verfügt über eine rohrförmige Seitenwandung 3, welche auf der dem Behälterflansch 11 abgewandten Seite mit einer Deckelwandung 4 abschließt. In diesem becherartigen Metallmantel sitzt formschlüssig das eine Ende 2a des dielektrischen Stabstrahlers 2. Die Seitenwandung 3 der becherartigen Metallwandung weist darüber hinaus noch eine radial angeordnete Öffnung 6 auf, in welcher beispielsweise eine Koaxialbuchse 14 zum Hindurchführen einer Zuleitung 13 befestigt ist. Die Zuleitung 13 dient zum Zuführen von HF-Energie eines nicht dargestellten Sende- und Empfangsteiles des Füllstandmeßradargerätes zu einem Erregerelement 7, das in einer Ausnehmung des einen Endes 2a des dielektrischen Stabstrahlers 2 sitzt. Der becherartige Metallmantel samt einem Ende 2a des dielektrischen Stabstrahlers 2 und Erregerelement 7 bilden den Resonator 1 der dargestellten Antenneneinrichtung.

Erfindungsgemäß ist an den dielektrischen Stabstrahler 2 eine Platte 2c, die beispielsweise scheibenförmig ausgebildet sein kann, einstückig angeformt. Diese Platte 2c besteht aus dem gleichen Material wie der Stabstrahler 2. Die dielektrische Platte 2c bzw. Scheibe erstreckt sich orthogonal zur Achse A des Stabstrahlers 2, wobei der Stabstrahler 2 mindestens annähernd mittig zur Platte 2c angeordnet ist.

Die dielektrische Platte 2c weist einen größeren Durchmesser als die Öffnung 8 des Behälterflansches li auf, so daß ein sicheres Abdichten bzw. Aufliegen der Platte 2c auf dem Behälterflansch 11 gewährleistet ist.

Parallel zur dielektrischen Platte 2c liegt eine weitere Platte 12, die beispielsweise aus Metall bestehen kann und einstückig mit der Seitenwandung 3 des Resonators in Verbindung steht. Diese Platte 12 kann als Montageflansch dienen.

Werden in dieser Platte 12 und im Behälterflansch 11 des Behälters zueinander gegenüberliegende Befestigungsbohrungen angebracht, wie dies anhand der Bezugszeichen 15 in der Figur angedeutet ist, so ist eine einfache Montage des Füllstandmeßradargerätes auf dem Behälterflansch 11 mittels Schrauben und Muttern möglich. Die dielektrische Platte 2c kann klemmend zwischen dem Behälterflansch 11 und der Platte 12 gehalten werden. Darüber hinaus ist es auch möglich, die Platte 2c mit geeigneten Bohrungen zu versehen, um die Platte 12 samt dielektrischer Platte 2c am Behälterflansch 11 zu befestigen. Es ist zu erwähnen, daß die Platte 12 nicht unbedingt notwendig ist. So kann die dielektrische Platte 2c allein am Behälterflansch 11 befestigt werden. Wesentlich ist lediglich, daß ein diffusionsdichtes Abschließen der Öffnung 8 gewährleistet ist.

Erfindungsgemäß können der dielektrische Stabstrahler 2 und die dielektrische Platte 2c miteinander verschweißt sein, in einem Stück gesintert oder komplett durch Spritzguß hergestellt werden.

Wie in der Darstellung des Ausführungsbeispiels zu erkennen, kann der in die Öffnung 8 des Innenraumes 10 des Behälters ragende Teil 2b des dielektrischen Stabstrahlers konisch ausgebildet sein. Eine in Richtung des Behälterinnenraumes verjüngte Ausbildung des Stabstrahlers 2 hat sich für die Abstrahlung der Mikrowellen als günstig erwiesen.

### FIGURENLEGENDE

- 1: Vorrichtung
- 2: Stabstrahler
- 3: Seitenwandung
- 4: Deckelwandung
- 6: Öffnung
- 7: Erregerelement
- 8: Öffnung
- 10: Innenraum des Behälters
- 11: Behälterflansch
- 12: Platte
- 13: Zuleitung
- 14: Koaxialbuchse
- 15: Befestigungsbohrung

- A: Achse
- 2a: ein Ende des Stabstrahlers
- 2b: anderes Ende des Stabstrahlers
- 2c: Platte

## Patentansprüche

1. Antenneneinrichtung für ein Füllstandmeßradargerät, mit einer Vorrichtung (1) zum Einkoppeln von HF-Energie und mit einer Antenne zum Abstrahlen von aus der einkoppelbaren HF-Energie erzeugten Mikrowellen durch eine Öffnung (8) in einen Innenraum (10) eines Behälters, wobei die Antenne als ein Stabstrahler (2) aus dielektrischem Material ausgebildet ist, dadurch gekennzeichnet, daß an den Stabstrahler (2) eine mindestens annähernd orthogonal zur Achse des Stabstrahlers (2) liegende Platte (2c) aus dem selben dielektrischem Material einstückig angeformt ist und daß die Platte (2c) ausreichend groß ausgebildet ist, um die Öffnung (8) des Behälters abzudecken.

2. Antenneneinrichtung nach Anspruch 1, dadurch gekennzeichnet, daß die Vorrichtung (1) zum Einkoppeln von HF-Energie ein Resonator ist.

3. Antenneneinrichtung nach Anspruch 2, dadurch gekennzeichnet, daß der Resonator einen becherartigen, mit einer Seitenwandung (3) und einer Deckelwandung (4) versehenen Metallmantel aufweist, in welchem der Stabstrahler (2) mit seinem einen Ende (2a) sitzt, wobei der Metallmantel mit einer Öffnung (6) zum Durchführen eines im Stabstrahler (2) angeordneten Erregerelementes (7) versehen ist, und daß das andere Ende (2b) des Stabstrahlers (2) zum Hineinragen durch die Öffnung (8) in den Innenraum (10) des Behälters vorgesehen ist.

4. Antenneneinrichtung nach einem der Ansprüche 1 bis 3, dadurch gekennzeichnet, daß der Stabstrahler (2) in etwa mittig zur Platte (2c) angeordnet ist.

5. Antenneneinrichtung nach einem der Ansprüche 1 bis 4, dadurch gekennzeichnet, daß die Platte (2c) scheibenförmig ausgebildet ist.

6. Antenneneinrichtung nach einem der Ansprüche 1 bis 5, dadurch gekennzeichnet, daß das dielektrische Material Kunststoff, Glas oder Keramik oder ein Mischprodukt aus diesen Materialien ist.

7. Antenneneinrichtung nach einem der Ansprüche 1 bis 6, dadurch gekennzeichnet, daß der Stabstrahler (2) und die Platte (2c) miteinander verschweißt sind.

8. Antenneneinrichtung nach einem der Ansprüche 1 bis 7, dadurch gekennzeichnet, daß der Stabstrahler (2) und die Platte (2c) aus einstückig gesintertem Material bestehen.

9. Antenneneinrichtung nach einem der Ansprüche 1 bis 8, dadurch gekennzeichnet, daß der Stabstrahler (2) und die Platte (2c) als gemeinsames Teil durch Spritzguß hergestellt sind.

10. Antenneneinrichtung nach einem der Ansprüche 1 bis 9, dadurch gekennzeichnet, daß der becherartige Metallmantel des Resonators an seiner der Deckelwandung (4) gegenüberliegenden offenen Seite mit einer sich von der Seitenwandung (3) und vom Stabstrahler (2) weg erstreckenden und orthogonal zur Achse (A) des Stabstrahlers (2) angeordneten Platte (12) versehen ist, an welcher die dielektrische Platte (2c) flächig anliegt.

11. Antenneneinrichtung nach einem der Ansprüche 1 bis 10, dadurch gekennzeichnet, daß die dielektrische Platte (2c) eine ausreichende Dicke aufweist, um den Innenraum (10) des Behälters diffusionsdicht abzudecken, vorzugsweise eine Dicke von 2 mm bis 5 mm.

## Claims

1. An antenna device for a level measuring radar instrument, having a device (1) for bunching HF energy and having an antenna for radiating microwaves produced from the bunched HF energy through an aperture (8) into an interior (10) of a container, wherein the antenna is constructed as a bar radiator (2) from dielectric material,
**characterised in that** moulded in one piece on the bar radiator (2) is a plate (2c) made from the same dielectric material, which lies at least approximately orthogonally to the axis of the bar radiator (2),
**and in that** the plate (2c) has a sufficiently large construction to cover the aperture (8) of the container.

2. An antenna device according to Claim 1,
**characterised in that** the device (1) for bunching HF energy is a resonator.

3. An antenna device according to Claim 2,
**characterised in that** the resonator comprises a cup-shaped metal jacket provided with a side wall (3) and a cover wall (4), in which the bar radiator (2) is seated by its one end (2a), wherein the metal jacket is provided with an aperture (6) for the passage ofa primary radiator (7) disposed in the bar radiator (2),
**and in that** the other end (2b) of the bar radiator (2) is provided to extend through the aperture (8) into the interior (10) of the container.

4. An antenna device according to one of Claims 1 to 3,
**characterised in that** the bar radiator (2) is disposed to some extent centrally to the plate (2c).

5. An antenna device according to one of Claims 1 to 4,
**characterised in that** the plate (2c) has a disk-shaped construction.

6. An antenna device according to one of Claims 1 to 5,
**characterised in that** the dielectric material is plastic, glass or ceramics or a mixture of these materials.

7. An antenna device according to one of Claims 1 to 6,
**characterised in that** the bar radiator (2) and the plate (2c) are welded together.

8. An antenna device according to one of Claims 1 to 7,
**characterised in that** the bar radiator (2) and the plate (2c) are made of material sintered in one piece.

9. An antenna device according to one of Claims 1 to 8,
**characterised in that** the bar radiator (2) and the plate (2c) are produced as a common part by injection moulding.

10. An antenna device according to one of Claims 1 to 9,
**characterised in that** the cup-shaped metal jacket of the resonator is provided on its open side opposite the cover wall (4) with a plate (12) which extends away from the side wall (3) and from the bar radiator (2) and is disposed orthogonally to the axis (A) of the bar radiator (2), against which plate the dielectric plate (2c) flatly abuts .

11. An antenna device according to one of Claims 1 to 10,
**characterised in that** the dielectric plate (2c) has a sufficient thickness to cover the interior (10) of the container in a diffusion-tight manner, preferably a thickness of 2 mm to 5 mm.

## Revendications

1. Système d'antenne pour une jauge radar de niveau de remplissage, comprenant un dispositif (1), qui sert à coupler de l'énergie à haute fréquence et une antenne, qui sert à rayonner des micro-ondes, produites à partir de l'énergie à haute fréquence ayant pu être couplée, à travers un orifice (8) à l'intérieur (10) d'un réservoir, l'antenne étant constituée sous la forme d'une antenne en forme de cierge (2) en une matière diélectrique,
caractérisé en ce que
l'on forme d'une seule pièce sur l'antenne en forme de cierge (2) une plaque (2c), qui se trouve au moins approximativement perpendiculaire à l'axe de l'antenne en forme de cierge (2) et qui est en une matière diélectrique, et
en ce que
la place (2c) est constituée de façon suffisamment grande pour recouvrir l'orifice (8)du réservoir.

2. Système d'antenne selon la revendication 1,
caractérisé en ce que
le dispositif (1) servant à coupler de l'énergie à haute fréquence, est un résonateur.

3. Système d'antenne selon la revendication 2,
caractérisé en ce que
le résonateur présente une enveloppe en métal, en forme de cuvette, pourvue d'une paroi latérale (3) et d'une paroi de couvercle (4), dans laquelle repose l'antenne en forme de cierge (2) par l'une de ses extrémités (2a), l'enveloppe en métal étant pourvue d'une ouverture (6) servant à faire passer un élément d'excitation (7) disposé dans l'antenne en forme de cierge (2), et
en ce que
l'autre extrémité (2b) de l'antenne en forme de cierge (2) est prévue pour passer à travers l'orifice (8) à l'intérieur (10) du réservoir.

4. Système d'antenne selon l'une des revendications 1 à 3,
caractérisé en ce que
l'antenne en forme de cierge (2) est disposée à peu près au milieu par rapport à la plaque (2c).

5. Système d'antenne selon l'une des revendications 1 à 4,
caractérisé en ce que
laque (2c) est constituée en forme de disque.

6. Système d'antenne selon l'une des revendications 1 à 5,
caractérisé en ce que
la matière diélectrique est une matière plastique, du verre ou de la céramique ou un produit mixte composé avec ces matières.

7. Système d'antenne selon l'une des revendications 1 à 6,
caractérisé en ce que
l'antenne en forme de cierge (2) et la plaque (2c) sont soudées ensemble.

8. Système d'antenne selon l'une des revendications 1 à 7,
caractérisé en ce que
l'antenne en forme de cierge (2) et la plaque (2c) sont réalisées d'une seule pièce en une matière frittée.

9. Système d'antenne selon l'une des revendications 1 à 8,
caractérisé en ce que
l'antenne en forme de cierge (2) et la plaque (2c) sont fabriquées en tant que pièce commune par coulée par injection.

10. Système d'antenne selon l'une des revendications 1 à 9,
caractérisé en ce que
l'enveloppe en métal, en forme de cuvette, du résonateur est pourvue sur son côté ouvert, qui se trouve en regard de la paroi de couvercle (4), d'une plaque (12) qui va en s'écartant de la paroi latérale (3) et de l'antenne en forme de cierge (2) et qui est disposée perpendiculairement à l'axe (A) de l'antenne en forme de cierge (2), plaque sur laquelle repose à plat la plaque diélectrique (2c).

11. Système d'antenne selon l'une des revendications 1 à 10,
caractérisé en ce que
la plaque diélectrique (2c) présente une épaisseur suffisante pour recouvrir l'intérieur (10) du réservoir de façon étanche à la diffusion, et de préférence une épaisseur de 2 mm à 5 mm.
